# EUROPEAN PATENT APPLICATION

(11) **EP 4 383 370 A1**
(43) Date of publication of application: **12.06.2024**
(21) Application number: 23793221.5
(22) Date of filing: 28.08.2023
(51) Int. Cl.: H01M 4/48, H01M 4/131, H01M 4/485, H01M 4/505, H01M 4/525, H01M 4/62, H01M 10/0525

(54) **HIGH-NICKEL LOW-COBALT POSITIVE ELECTRODE MATERIAL, PREPARATION METHOD THEREFOR AND USE THEREOF**

(30) Priority: 24.10.2022 CN 202211302463
(71) Applicant: Tianjin B&M Science And Technology Co., Ltd., Tianjin 300384 (CN)
(72) Inventor: CHEN, Zhiyu, Tianjin 300384 (CN); LI, Honglei, Tianjin 300384 (CN); JI, Changyin, Tianjin 300384 (CN); LV, Fei, Tianjin 300384 (CN); XU, Ning, Tianjin 300384 (CN)
(74) Representative: Meroni, Francesca
(86) International application number: PCT/CN2023/115137
(87) International publication number: WO 2024/087855

(57) **Abstract**

A high-nickel low-cobalt cathode material provided in the present disclosure includes a cathode material matrix, a first coating layer, and a second coating layer, wherein the first coating layer is coated on a surface of the cathode material matrix, and the second coating layer is coated on a surface of the first coating layer; the first coating layer includes a material of a chemical formula LiₐNi_{b}Co_{c}M_{1-b-c}O_{d}, where M includes one or two of Mn and Al, 0.2≤a≤1, 0.88<b≤0.98, 0≤c<0.06, b+c<1, and 1.6≤d≤2; and a material of the second coating layer includes one or more of Li₃PO₄, Li₂SO₄, and LiPOs. The above high-nickel low-cobalt cathode material can prevent an electrolytic solution from corroding the cathode material matrix, protect integrity of bulk phase structure, and effectively inhibit decomposition and collapse of layered structure of the high-nickel low-cobalt cathode material during the charging and discharging cycles, thereby improving the long cycle performance of the high-nickel low-cobalt cathode material.

## Description

### Cross-reference to Related Applications

The present disclosure claims priority to the Chinese patent application with the filing No. 202211302463.4, filed with the Chinese Patent Office on October 24, 2022, and entitled "High-nickel Low-cobalt Cathode Material and Preparation Method and Use thereof", all the contents of which are incorporated herein by reference in entirety.

### Technical Field

The present disclosure relates to the technical field of lithium ion batteries, and particularly to a high-nickel low-cobalt cathode material and a preparation method and use thereof.

### Background Art

Matured application of lithium ion batteries to electric vehicles and electric tools makes the development of current power batteries pursue higher endurance and longer service lifetime. At present, the type of high nickel and low cobalt, and the type of medium nickel and high voltage have become two major application research aspects of cathode materials of lithium ion battery. The high-nickel low-cobalt cathode material has obvious advantages due to low cost and high energy density thereof. However, the high-nickel low-cobalt cathode material causes rapid attenuation of long cycle capacity of batteries due to transition metal migration, structural transformation, surface oxygen loss and so on. This greatly limits further development of high nickel and low cobalt in lithium ion power batteries.

### Summary

Based on this, it is necessary to provide a high-nickel low-cobalt cathode material and a preparation method and use thereof, so as to prevent an electrolytic solution from corroding a cathode material matrix, protect integrity of bulk phase structure, and effectively inhibit decomposition and collapse of layered structure of the high-nickel low-cobalt cathode material during charging and discharging cycles, thereby improving the long cycle performance of the high-nickel low-cobalt cathode material.

An embodiment of the present disclosure provides a high-nickel low-cobalt cathode material, including a cathode material matrix, a first coating layer, and a second coating layer, wherein the first coating layer is coated on a surface of the cathode material matrix, and the second coating layer is coated on a surface of the first coating layer;
the first coating layer includes a material of a chemical formula LiₐNi_{b}Co_{c}M_{1- b-c}O_{d}, where M includes one or two of Mn and Al, 0.2≤a≤1, 0.88<b≤0.98, 0≤c<0.06, b+c<1, and 1.6≤d≤2; and
a material of the second coating layer includes one or more of Li₃PO₄, Li₂SO₄, and LiPOs.

Optionally, the cathode material matrix includes a material of a chemical formula LiNiₓCo_{y}M_{1-x-y}O₂, where M includes one or more of Mn and Al, 0.88<x≤0.98, 0≤y<0.06, and x+y≤1.

Optionally, a total mass of the first coating layer and the second coating layer: a mass of the cathode material matrix is (0.0001 to 0.005): 1.

Optionally, the first coating layer has a thickness of 5 nm to 10 nm.

Optionally, the first coating layer is of spinel phase.

Optionally, the second coating layer has a thickness of 2 nm to 5 nm.

Optionally, the second coating layer is of halite phase.

The present disclosure further provides a preparation method of the above high-nickel low-cobalt cathode material, including following steps:
providing a cathode material matrix; and
mixing the cathode material matrix with a sulfur phosphorus compound, and then performing a first calcination treatment, so as to form the first coating layer and the second coating layer on a surface of the cathode material matrix.

Optionally, phosphorous element in the sulfur phosphorus compound: the cathode material matrix is (0.001 to 0.01): 1 in molar ratio.

Optionally, the sulfur phosphorus compound comprises one or more of phosphorus sulfide and phosphorus trisulfide.

Optionally, process conditions of the first calcination treatment include: a first calcination temperature of 260 °C to 600 °C, and first calcination time of 4 h to 12 h.

Optionally, the preparation method of the cathode material matrix includes following steps:
S1, mixing a lithium source, a metal compound, and a cathode material matrix precursor, to obtain a mixture; and
S2, subjecting the mixture to a second calcination treatment.

Optionally, the cathode material matrix precursor includes a material of a chemical formula NiₓCo_{y}M_{1-x-y}(OH)₂, where M includes one or more of Mn and Al, 0.88<x≤0.98, 0≤y<0.06, and x+y<1.

Optionally, the lithium source includes one or more of lithium hydroxide and lithium carbonate.

Optionally, the metal compound includes a compound of one or more of Mg, Ti, Zr, Y, Nb, W, Ce, Sb, Sr, and Ta.

Optionally, in step S2, a temperature of the second calcination treatment is 600 °C to 1000 °C, and time of the second calcination treatment is 4 h to 20 h.

Optionally, in molar ratio, lithium ion in the lithium source: metal element in the metal compound: the cathode material matrix precursor is (1.00 to 1.08): (0 to 0.02): 1 in step S1.

The present disclosure further provides a cathode sheet, including the above high-nickel low-cobalt cathode material or the high-nickel low-cobalt cathode material prepared by the above preparation method.

The present disclosure further provides a lithium ion battery, including the above cathode sheet.

The present disclosure further provides a power consumption device, including the above lithium ion battery.

Compared with the conventional technologies, the high-nickel low-cobalt cathode material and the preparation method and use thereof at least have the following advantages:
(1) the above first coating layer and second coating layer can prevent electrochemical decomposition behaviors of (010) active crystal plane of the high-nickel low-cobalt cathode material during charging and discharging, thus achieving effective protection to the active crystal face. Meanwhile, the first coating layer and the second coating layer can prevent decomposition of the electrolytic solution and corrosion of the electrolytic solution to the cathode material matrix, protect integrity of layered structure of bulk phase of the high-nickel low-cobalt cathode material, and effectively prevent decomposition of the bulk phase structure, thus further improving discharging specific capacity, initial efficiency, cycle life, and rate performance of the lithium ion battery; and
(2) by forming the first coating layer and the second coating layer through the first calcination treatment, the above high-nickel low-cobalt cathode material solves the problems that the conventional high-nickel cathode material has high residual alkali, and lithium-ion transmission channels are blocked to hinder exertion of performance, omits the conventional water washing process, reduces production costs, and also makes it easy to control the process.

### Brief Description of Drawings

FIG. 1 is an SEM diagram of a high-nickel low-cobalt cathode material prepared in Example 1 of the present disclosure;
FIG. 2 is a TEM diagram of the high-nickel low-cobalt cathode material prepared in Example 1 of the present disclosure;
FIG. 3 is an XRD diagram of the high-nickel low-cobalt cathode material prepared in Example 1 of the present disclosure; and
FIG. 4 is a comparison diagram of cycle performance of high-nickel low-cobalt cathode materials prepared in Example 1 and Comparative Examples 1 to 3 of the present disclosure.

### Detailed Description of Embodiments

In order to facilitate understanding the present disclosure, the present disclosure will be described more comprehensively below. Preferred examples of the present disclose are given in specific examples. However, the present disclosure can be realized in many different forms, and is not limited to the examples described herein. In contrast, these examples are provided for the purpose of making the contents disclosed in the present disclosure more thorough and more comprehensive.

Unless otherwise defined, all of the technical and scientific terms used herein have the same meanings as those generally understood by those skilled in the art of the present disclosure. Terms used herein in the description of the present disclosure are only for the purpose of describing specific examples, rather than limiting the present disclosure. The term "multiple (a plurality of)" in the present disclosure means at least two, such as two, three, etc., unless otherwise clearly and specifically defined.

In the present disclosure, for the technical features described in an open manner, a closed technical solution composed of the listed features is included, and an open technical solution containing the listed features is also included.

An embodiment of the present disclosure provides a high-nickel low-cobalt cathode material, including a cathode material matrix, a first coating layer, and a second coating layer, wherein the first coating layer is coated on a surface of the cathode material matrix, and the second coating layer is coated on a surface of the first coating layer.

The first coating layer includes a material of a chemical formula LiₐNi_{b}Co_{c}M_{1-b-c}O_{d}, where M includes one or two of Mn and Al, 0.2≤a≤1, 0.88<b≤0.98, 0≤c<0.06, b+c<1, and 1.6≤d≤2.

A material of the second coating layer includes one or more of Li₃PO₄, Li₂SO₄, and LiPOs.

The above first coating layer can effectively isolate the cathode material matrix from an external environment. Li₃PO₄, Li₂SO₄, and LiPO₃ of the second coating layer can prevent electrochemical decomposition behaviors of (010) active crystal plane of the high-nickel low-cobalt cathode material during charging and discharging, thus achieving effective protection to the active crystal face. Meanwhile, the first coating layer and the second coating layer can prevent decomposition of an electrolytic solution and corrosion of the electrolytic solution to the cathode material matrix, protect the integrity of layered structure of bulk phase of the high-nickel low-cobalt cathode material, and effectively prevent decomposition of the bulk phase structure, further improving discharging specific capacity, initial efficiency, and cycle life of the lithium ion battery. It can be understood that a may be any value from 0.2 to 1, for example: 0.2, 0.3, 0.4, 0.5, 0.6, 0.7, 0.8, 0.9 or 1; b may be, for example, 0.89, 0.90, 0.91, 0.92, 0.93, 0.94, 0.95, 0.96, 0.97 or 0.98; c may be, for example, 0.01, 0.02, 0.03, 0.04 or 0.05; and d may be any value from 1.6 to 2, for example, 1.6, 1.62, 1.65, 1.67, 1.7, 1.8, 1.9 or 2.

In some embodiments, the cathode material matrix includes a material of a chemical formula LiNiₓCo_{y}M_{1-x-y}O₂, where M includes one or more of Mn and Al, 0.88<x≤0.98, 0≤y<0.06, and x+y≤1. It can be understood that x may be, for example, 0.89, 0.90, 0.91, 0.92, 0.93, 0.94, 0.95, 0.96, 0.97, 0.98, and y may be, for example, 0.01, 0.02, 0.03, 0.04 or 0.05.

In some embodiments, a total mass of the first coating layer and the second coating layer: a mass of the cathode material matrix is (0.0001 to 0.005): 1. It can be understood that the ratio of the total mass of the first coating layer and the second coating layer to the mass of the cathode material matrix may be, for example, 0.0001:1, 0.00012:1, 0.00013:1, 0.00015:1, 0.00018:1, 0.0002:1, 0.00022:1, 0.00025:1, 0.00028:1, 0.0003:1, 0.00035:1, 0.0004:1, 0.00045:1 or 0.0005:1.

In some embodiments, the first coating layer has a thickness of 5 nm to 10 nm. It can understood that the thickness of the first coating layer may be, for example, 5 nm, 5.5 nm, 6 nm, 6.5 nm, 7 nm, 7.5 nm, 8 nm, 8.5 nm, 9 nm, 9.5 nm, or 10 nm, and the thickness of the first coating layer also may be other values from 5 nm to 10 nm.

In some embodiments, the first coating layer is of spinel phase. It should be noted that a fast ionic conductor coating layer is formed on the surface of the first coating layer having the spinel phase, which can prevent the electrochemical decomposition behaviors of the (010) active crystal plane of the high-nickel low-cobalt cathode material during charging and discharging, thereby achieving effective protection to the active crystal face.

Further, the second coating layer is of halite phase. The above first coating layer and second coating layer being of the spinel phase and the halite phase greatly improves the stability of the surface structure of the high-nickel low-cobalt cathode material, thereby improving the electrochemical performance.

In some embodiments, the second coating layer has a thickness of 2 nm to 5 nm. It can be understood that the thickness of the second coating layer may be, for example, 2 nm, 2.5 nm, 3 nm, 3.5 nm, 4 nm, 4.5 nm, or 5 nm, and the thickness of the second coating layer also may be other values from 2 nm to 5 nm.

Another embodiment of the present disclosure provides a preparation method of the above high-nickel low-cobalt cathode material, including the following steps:
providing a cathode material matrix; and
mixing the cathode material matrix with a sulfur phosphorus compound, and then performing a first calcination treatment, so as to form a first coating layer and a second coating layer on a surface of the cathode material matrix.

The above cathode material matrix includes a material of a chemical formula LiNiₓCo_{y}M_{1-x-y}O₂, where M includes one or more of Mn and Al, 0.88<x≤0.98, 0≤y<0.06, and x+y≤1. The above cathode material reacts with the sulfur phosphorus compound when being subjected to the first calcination treatment, thereby forming the first coating layer and the second coating layer. The formed first coating layer includes a material of a chemical formula LiₐNi_{b}Co_{c}M_{1-b-c}O_{d}, where M includes one or both of Mn and Al, where 0.2≤a≤1, 0.88<b≤0.98, 0≤c<0.06, b+c<1, and 1.6≤d≤2. A material of the second coating layer includes one or more of Li₃PO₄, Li₂SO₄, and LiPOs. The coating of the cathode material matrix can be completed through the first calcination treatment, thereby reducing the conventional water washing and drying processes, reducing production costs, facilitating industrial production, and meanwhile solving the problems that the conventional high-nickel cathode material has high residual alkali, and lithium-ion transmission channels are blocked to hinder exertion of performance. The above sulfur phosphorus compound reconstructs the layered phase of the surface of the cathode material matrix into a more stable spinel phase through strong lithium deintercalation and deoxygenation under thermodynamic equilibrium, and meanwhile, multiple types of amorphous fast ionic conductor coating layers are formed on an outer surface of the first coating layer, which can prevent the electrochemical decomposition behaviors of the (010) active crystal plane of the material during charging and discharging, and achieve the effective protection to the active crystal face. The above first coating layer and second coating layer can prevent decomposition of an electrolytic solution and corrosion of the electrolytic solution to the cathode material matrix, protect the integrity of layered structure of bulk phase of the high-nickel low-cobalt cathode material, and effectively prevent decomposition of the bulk phase structure, further improving discharging specific capacity, initial efficiency, and cycle life of the battery.

In some embodiments, phosphorous element in the sulfur phosphorus compound: the cathode material matrix is (0.001 to 0.01): 1 in molar ratio. It can be understood that the molar ratio of the phosphorous element in the sulfur phosphorus compound to the cathode material matrix may be, for example, 0.001:1, 0.002:1, 0.003:1, 0.004:1, 0.005:1, 0.006:1, 0.007:1, 0.008:1, 0.009:1 or 0.01:1.

Specifically, the sulfur phosphorus compound includes one or more of phosphorus sulfide and phosphorus pentasulfide.

In some embodiments, process conditions of the first calcination treatment include: a first calcination temperature of 260 °C to 600 °C, and first calcination time of 4 h to 12 h. It can be understood that the first calcination temperature may be any value from 260 °C to 600 °C, for example: 260 °C, 280 °C, 300 °C, 320 °C, 340 °C, 360 °C, 380 °C, 400 °C, 450 °C, 500 °C, 550 °C, 600 °C; and the first calcination time may be any value from 4 h to 12 h, and may be, for example, 4 h, 5 h, 6 h, 7 h, 8 h, 9 h, 10 h.

In some embodiments, the preparation method of a cathode material matrix includes the following steps:
S1, mixing a lithium source, a metal compound, and a cathode material matrix precursor, to obtain a mixture; and
S2, subjecting the mixture to a second calcination treatment, a crushing treatment, and a sieving treatment in turn, to obtain the cathode material matrix.

It should be noted that for the above cathode material matrix obtained after the sieving treatment, it is feasible that a median particle size D50 thereof is 1.2 µm to 15 µm. It can be understood that the median particle size D50 of the above cathode material matrix obtained after the sieving treatment may be, for example, 1.2 µm, 1.5 µm, 2 µm, 3 µm, 4 µm, 5 µm, 6 µm, 7 µm, 8 µm, 9 µm, 10 µm, 11 µm, 12 µm, 13 µm, 14 µm or 15 µm.

In some embodiments, the cathode material matrix precursor includes a material of a chemical formula NiₓCo_{y}M_{1-x-y}(OH)₂, where M includes one or more of Mn and Al, 0.88<x≤0.98, 0≤y<0.06, and x+y<1. It can be understood that x may be, for example, 0.89, 0.90, 0.91, 0.92, 0.93, 0.94, 0.95, 0.96, 0.97 or 0.98, and y may be, for example, 0.01, 0.02, 0.03, 0.04 or 0.05.

In some embodiments, the lithium source includes one or more of lithium hydroxide and lithium carbonate.

In some embodiments, the metal compound includes a compound of one or more of Mg, Ti, Zr, Y, Nb, W, Ce, Sb, Sr, and Ta. It should be noted that the metal compound may be oxide, hydroxide or carbonate of the above metals, for example, MgO, TiO₂, ZrO₂, Y₂O₃, Nb₂O₅, WO₃, CeO₂, Sb₂O₃, Sb₂O₅, SrO, Ta₂O₅, Mg(OH)₂, Zr(OH)₄, Ti(OH)₄, Sr(OH)₂, MgCO₃, SrCO₃ or Zr₃(CO₃)O₅.

In some embodiments, in step S2, a temperature of the second calcination treatment is 600 °C to 1000 °C, and time of the second calcination treatment is 4 h to 20 h. It can be understood that the temperature of the second calcination treatment may be any value from 600 °C to 1000 °C, for example, it may be 600 °C, 650 °C, 700 °C, 750 °C, 800 °C, 850 °C, 900 °C, 950 °C or 1000 °C; and the time of the second calcination treatment may be 4 h, 5 h, 6 h, 7 h, 8 h, 9 h, 10 h, 11 h, 12 h, 13 h, 14 h, 15 h, 16 h, 17 h, 18 h, 19 h or 20 h, and also may be other values from 4 h to 20 h.

In some embodiments, in molar ratio, lithium ion in the lithium source: metal element in the metal compound: the cathode material matrix precursor is (1.00 to 1.08): (0 to 0.02): 1 in step S1. It can be understood that in molar ratio, the lithium ion in the lithium source: the metal element in the metal compound: the cathode material matrix precursor in step S1 may be 1.00:0.01:1, 1.01:0.012:1, 1.02:0.013:1, 1.03:0.014:1, 1.04:0.015:1, 1.05:0.016:1, 1.06:0.017:1, 1.07:0.018:1, 1.08:0.019:1 or 1.08:0.02:1, etc.

Another embodiment of the present disclosure provides a cathode sheet, including the above high-nickel low-cobalt cathode material or the high-nickel low-cobalt cathode material prepared by the above preparation method.

It should be noted that, the above cathode sheet includes a cathode current collector and a cathode active substance layer disposed on at least one surface of the cathode current collector. The cathode active substance layer includes a cathode active substance, a conductive agent, and a binder. The cathode active substance can use the above high-nickel low-cobalt cathode material or the high-nickel low-cobalt cathode material prepared by the above preparation method. The conductive agent and the binder are not particularly limited, and the conductive agents and the binders commonly used in the art can be used. For example, the conductive agent may be a material such as carbon black, acetylene black, ketjen black, carbon fiber, carbon nanotube, and graphene, or a mixture thereof, and the binder includes, but is not limited to, vinylidene fluoride, polyvinyl alcohol, carboxymethyl cellulose, hydroxypropyl cellulose, hydroxyethyl cellulose, polytetrafluoroethylene, etc. A preparation process of the above cathode sheet includes, but is not limited to, coating a slurry obtained by mixing the cathode active substance, the conductive agent, the binder, and a solvent on the cathode current collector, and performing steps such as a drying process, a rolling process, and a slicing process in turn to obtain the cathode sheet.

Another embodiment of the present disclosure provides a lithium ion battery, including the above cathode sheet.

A preparation method of the above lithium ion battery includes, but is not limited to: laminating or winding the above cathode sheet, a separator, and a negative electrode sheet to obtain an electrode set, and assembling the electrode set with a case and then injecting an electrolytic solution into the case to obtain the lithium ion battery. A PE film or a PP film can be selected as the separator, and graphite, soft carbon, hard carbon, composite carbon, silicon material or metallic lithium, etc. can be selected as the negative electrode material.

Another embodiment of the present disclosure provides a power consumption device, including the above lithium ion battery.

The above power consumption device includes, but is not limited to, a bicycle, a calculator, a portable audio recorder, a radio, a backup power supply, a lighting equipment, a toy, an electric tool, a notebook computer, a mobile computer, a game machine, a liquid crystal television, a motorcycle, a motor, an automobile, a camera, and the like.

The present disclosure is further described in detail below in combination with specific embodiments, but the embodiments of the present disclosure are not limited thereto.

Experimental raw materials used in the following examples and comparative examples are either commercially available or prepared according to conventional methods well known to those skilled in the art.

### Example 1

In the present example, a lithium source was LiOH, a metal compound was ZrO₂, and a high-nickel low-cobalt cathode material matrix precursor was Ni_{0.95}Co_{0.03}Mn_{0.02}(OH)₂.

A preparation method of a high-nickel low-cobalt cathode material included the following steps:
S1, mixing LiOH, ZrO₂, and Ni_{0.95}Co_{0.03}Mn_{0.02}(OH)₂ according to a molar ratio of 1.03:0.003:1, and fully mixing them to obtain a mixture;
S2, calcining the mixture obtained in step S1 at 780 °C for 15 hours, and then performing a crushing treatment and a sieving treatment in turn, to obtain a high-nickel low-cobalt cathode material matrix, which included LiNi_{0.95}Co_{0.03}Mn_{0.02}O₂; and
S3, fully mixing the high-nickel low-cobalt cathode material matrix obtained in step S2 with phosphorus sulfide with a molar ratio of the high-nickel low-cobalt cathode material matrix obtained in step S2 to phosphorus element in the phosphorus sulfide being 1:0.003, and then calcining mixture at 400 °C for 10 h, so as to form a first coating layer and a second coating layer on a surface of the high-nickel low-cobalt cathode material matrix, and then performing the crushing treatment and the sieving treatment, to obtain the high-nickel low-cobalt cathode material, wherein a material of the first coating layer included LiNi_{0.95}Co_{0.03}Mn_{0.02}O₂, and a material of the second coating layer included Li₃PO₄, Li₂SO₄, and LiPOs.

### Example 2

In the present example, a lithium source was LiOH, a metal compound was TiO₂, and a high-nickel low-cobalt cathode material matrix precursor was Ni_{0.94}Co_{0.03}Al_{0.03}(OH)₂.

A preparation method of a high-nickel low-cobalt cathode material included the following steps:
S1, mixing LiOH, TiO₂, and Ni_{0.94}Co_{0.03}Al_{0.03}(OH)₂ according to a molar ratio of 1.03:0.005:1, and fully mixing them to obtain a mixture;
S2, calcining the mixture obtained in step S1 at 800 °C for 13 hours, and then performing a crushing treatment and a sieving treatment in turn, to obtain a high-nickel low-cobalt cathode material matrix, which included LiNi_{0.94}Co_{0.03}Al_{0.03}O₂; and
S3, fully mixing the high-nickel low-cobalt cathode material matrix obtained in step S2 with phosphorus sulfide with a molar ratio of the high-nickel low-cobalt cathode material matrix obtained in step S2 to phosphorus element in the phosphorus sulfide being 1:0.004, and then calcining mixture at 450 °C for 8 h, so as to form a first coating layer and a second coating layer on a surface of the high-nickel low-cobalt cathode material matrix, and then performing the crushing treatment and the sieving treatment, to obtain the high-nickel low-cobalt cathode material, wherein a material of the first coating layer included LiNi_{0.94}Co_{0.03}Al_{0.03}O₂, and a material of the second coating layer included Li₃PO₄, Li₂SO₄, and LiPOs.

### Example 3

In the present example, a lithium source was LiOH, a metal compound was SrCO₃, and a high-nickel low-cobalt cathode material matrix precursor was Ni_{0.96}Co_{0.02}Mn_{0.02}(OH)₂.

A preparation method of a high-nickel low-cobalt cathode material included the following steps:
S1, mixing LiOH, SrCO₃, and Ni_{0.96}Co_{0.02}Mn_{0.02}(OH)₂ according to a molar ratio of 1.03:0.002:1, and fully mixing them to obtain a mixture;
S2, calcining the mixture obtained in step S1 at 760 °C for 10 hours, and then performing a crushing treatment and a sieving treatment in turn, to obtain a high-nickel low-cobalt cathode material matrix, which included LiNi_{0.96}Co_{0.02}Mn_{0.02}O₂; and
S3, fully mixing the high-nickel low-cobalt cathode material matrix obtained in step S2 with phosphorus sulfide with a molar ratio of the high-nickel low-cobalt cathode material matrix obtained in step S2 to phosphorus element in the phosphorus sulfide being 1:0.006, and then calcining mixture at 500 °C for 12 h, so as to form a first coating layer and a second coating layer on a surface of the high-nickel low-cobalt cathode material matrix, and then performing the crushing treatment and the sieving treatment, to obtain the high-nickel low-cobalt cathode material, wherein a material of the first coating layer included LiNi_{0.96}Co_{0.02}Mn_{0.02}O₂, and a material of the second coating layer included Li₃PO₄, Li₂SO₄, and LiPOs.

### Example 4

In the present example, a lithium source was LiOH, metal compounds were ZrO₂ and SrCOs, and a high-nickel low-cobalt cathode material matrix precursor was Ni_{0.95}Co_{0.02}Mn_{0.02}Al_{0.01}(OH)₂.

A preparation method of a high-nickel low-cobalt cathode material included the following steps:
S1, mixing LiOH, ZrO₂, SrCOs, and Ni_{0.95}Co_{0.02}Mn_{0.02}Al_{0.01}(OH)₂ according to a molar ratio of 1.03:0.002:0.002:1, and fully mixing them to obtain a mixture;
S2, calcining the mixture obtained in step S1 at 750 °C for 10 hours, and then performing a crushing treatment and a sieving treatment in turn, to obtain a high-nickel low-cobalt cathode material matrix, which included LiNi_{0.95}Co_{0.02}Mn_{0.02}Al_{0.01}O₂; and
S3, fully mixing the high-nickel low-cobalt cathode material matrix obtained in step S2 with phosphorus sulfide with a molar ratio of the high-nickel low-cobalt cathode material matrix obtained in step S2 to phosphorus element in the phosphorus sulfide being 1:0.003:0.003, and then calcining mixture at 550 °C for 6 h, so as to form a first coating layer and a second coating layer on a surface of the high-nickel low-cobalt cathode material matrix, and then performing the crushing treatment and the sieving treatment, to obtain the high-nickel low-cobalt cathode material, wherein a material of the first coating layer included LiNi_{0.95}Co_{0.02}Mn_{0.02}Al_{0.01}O₂, and a material of the second coating layer included Li₃PO₄, Li₂SO₄, and LiPOs.

### Example 5

Substantially the same as Example 1, the difference lies in that, in step S3, the high-nickel low-cobalt cathode material matrix and the phosphorus sulfide were fully mixed according to a molar ratio of the high-nickel low-cobalt cathode material matrix to phosphorus element in the phosphorus sulfide being 1 :0.001. In the high-nickel low-cobalt cathode material, the material of the first coating layer included LiNi_{0.95}Co_{0.03}Mn_{0.02}O₂, and a material of the second coating layer included Li₃PO₄, Li₂SO₄, and LiPOs.

### Example 6

Substantially the same as Example 1, the difference lies in that the high-nickel low-cobalt cathode material matrix and the phosphorus sulfide were fully mixed according to a molar ratio of the high-nickel low-cobalt cathode material matrix to phosphorus element in the phosphorus sulfide being 1:0.01. In the high-nickel low-cobalt cathode material, the material of the first coating layer included LiNi_{0.95}Co_{0.03}Mn_{0.02}O₂, and a material of the second coating layer included Li₃PO₄, Li₂SO₄, and LiPOs.

### Comparative Example 1

Substantially the same as Example 1, the difference lies in that step S3 was replaced by: calcining the high-nickel low-cobalt cathode material matrix obtained in step S2 at 400 °C for 10 h, and then performing a crushing treatment and a sieving treatment, to obtain the high-nickel low-cobalt cathode material.

### Comparative Example 2

Substantially the same as Example 1, the difference lies in that step S3 was replaced by: stirring and washing the high-nickel low-cobalt cathode material matrix obtained in step S2 and purified water at a mass ratio 1:1, then drying at 150 °C for 2 h to obtain an intermediate, calcining the intermediate at 400 °C for 10 h, and then performing the crushing treatment and the sieving treatment, to obtain the high-nickel low-cobalt cathode material.

### Comparative Example 3

Substantially the same as Example 1, the difference lies in that step S3 was replaced by: stirring and washing the high-nickel low-cobalt cathode material matrix obtained in step S2 and purified water according to a mass ratio 1:1, then drying at 150 °C for 2 h to obtain an intermediate, fully mixing the intermediate with phosphorus sulfide at a molar ratio of the intermediate to phosphorus element in the phosphorus sulfide being 1 :0.003, and calcining at 400 °C for 10 h, to obtain the high-nickel low-cobalt cathode material.

### SEM, TEM, and XRD tests

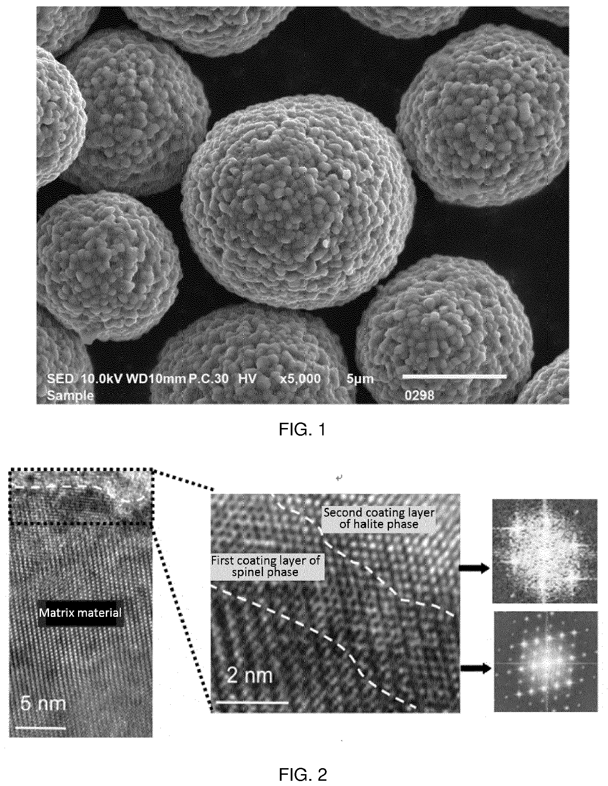

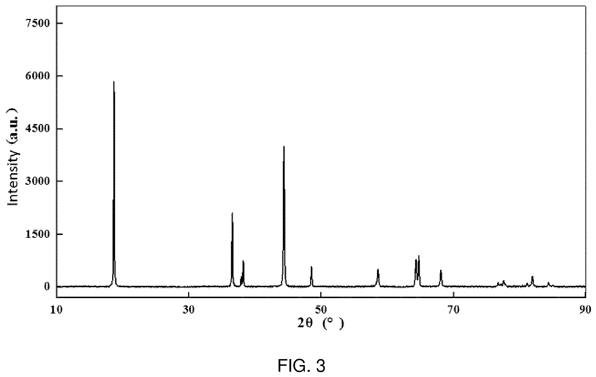

The high-nickel low-cobalt cathode material prepared in Example 1 was subjected to SEM, TEM, and XRD tests. Results are shown in FIGS. 1 to 3. It can be seen from FIG. 1 that the high-nickel low-cobalt cathode material prepared in Example 1 was spherical. It can be seen from FIG. 2 that the first coating layer was formed on the surface of the cathode material matrix of Example 1, the second coating layer was formed on the surface of the first coating layer, the first coating layer was of spinel phase, and the second coating layer was of halite phase. Since the mass percentage contents of the first coating layer and the second coating layer in the high-nickel low-cobalt cathode material prepared in Example 1 were relatively low, no peak shapes of the first coating layer and the second coating layer appear in FIG. 3.

The high-nickel low-cobalt cathode materials prepared in Examples 2 to 6 were also subjected to SEM, TEM, and XRD tests, and results thereof are similar to the test results of Example 1.

### Residual alkali content, Li element content, and electrochemical performance tests

The residual alkali (LiOH and Li₂CO₃) content in the high-nickel low-cobalt cathode materials prepared in Examples 1 to 6 and Comparative Examples 1 to 3 was tested by a titration method, and the Li element content in the high-nickel low-cobalt cathode materials was tested by ICP-AES. Test results are shown in Table 1.

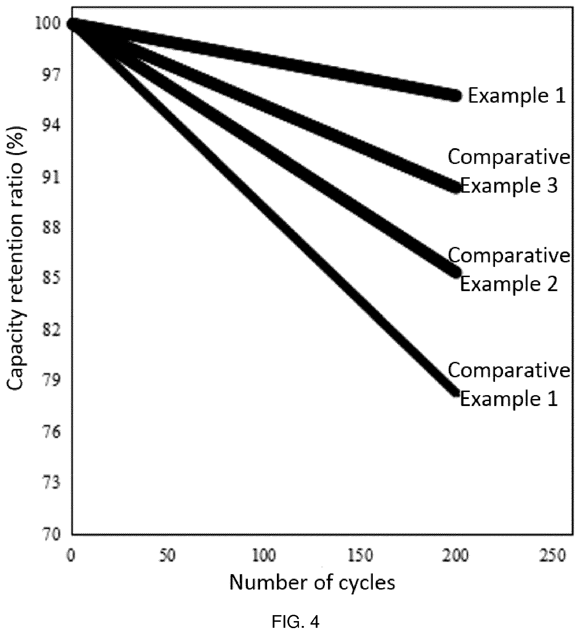

The high-nickel low-cobalt cathode materials prepared in Examples 1 to 6 and Comparative Examples 1 to 3 were made into cathode sheets. The cathode sheets were prepared according to a mass ratio of the high-nickel low-cobalt cathode material: conductive agent: PVDF=95:2.5:2.5. The above cathode sheet were respectively assembled into button batteries, and then initial discharging specific capacity, initial efficiency, and capacity retention ratio after 200 cycles were tested. Test conditions of the initial capacity and cycle of the button batteries were LR 2032, 0.3 C, 2.5 V to 4.25 V, and vs.Li⁺/Li, and test results are shown in Table 1 and FIG. 4. Test conditions of the rate capability were LR 2032, 0.33CC/XCD (X=0.33, 0.5, 1.0, 2.0), 2.5 V to 4.25 V, and vs.Li⁺/Li, and test results are shown in Table 2 and Table 3. In the above, 0.33CC/XCD means that the button battery is charged to 4.25 V at a current of 0.33 C at a constant current and then discharged to 2.5 V at a current of XC at a constant current.

**Table 1**

| Group | LiOH (ppm) | Li₂CO₃ (ppm) | Li element (%) |
|---|---|---|---|
| Example 1 | 3125 | 852 | 7.12 |
| Example 2 | 3022 | 886 | 7.11 |
| Example 3 | 3056 | 891 | 7.12 |
| Example 4 | 3072 | 875 | 7.10 |
| Example 5 | 3436 | 1129 | 7.13 |
| Example 6 | 2712 | 807 | 7.11 |
| Comparative Example 1 | 3665 | 2364 | 7.13 |
| Comparative Example 2 | 2272 | 804 | 6.72 |
| Comparative Example 3 | 1881 | 472 | 6.71 |

It can be seen from the data in Table 1 that, compared with Example 1, the contents of LiOH and Li₂CO₃ in Comparative Example 1 were significantly increased, indicating that after the high-nickel low-cobalt cathode material prepared in Example 1 was treated with phosphorus sulfide, the residual alkali content can be obviously reduced without losing the content of Li element. Although the contents of LiOH and Li₂CO₃ in the high-nickel low-cobalt cathode material prepared in Comparative Example 2 were reduced after the water-washing and drying processes, the content of Li element therein was reduced. Compared with Comparative Example 2, the residual alkali of the high-nickel low-cobalt cathode material prepared in Comparative Example 3 was reduced, and the Li element content was not lost.

**Table 2**

| Group | Initial Discharging Specific Capacity (mAh/g) | Initial Efficiency (%) | 200-cycle Capacity Retention Ratio (%) |
|---|---|---|---|
| Example 1 | 222.2 | 91.14 | 95.72 |
| Example 2 | 221.7 | 91.06 | 95.87 |
| Example 3 | 223.4 | 90.89 | 95.38 |
| Example 4 | 222.5 | 91.22 | 95.63 |
| Example 5 | 221.9 | 90.97 | 95.58 |
| Example 6 | 222.3 | 91.15 | 95.63 |
| Comparative Example 1 | 215.4 | 88.35 | 78.22 |
| Comparative Example 2 | 211.7 | 89.67 | 85.20 |
| Comparative Example 3 | 214.6 | 90.92 | 90.36 |

**Table 3**

| Group | 0.33CD (%) | 0.5CD (%) | 1.0CD (%) | 2.0CD (%) |
|---|---|---|---|---|
| Example 1 | 100 | 98.9 | 95.3 | 88.7 |
| Example 2 | 100 | 98.6 | 95.7 | 89.4 |
| Example 3 | 100 | 99.0 | 96.2 | 90.1 |
| Example 4 | 100 | 98.7 | 95.1 | 88.4 |
| Example 5 | 100 | 98.3 | 95.5 | 89.2 |
| Example 6 | 100 | 99.0 | 95.2 | 88.3 |
| Comparative Example 1 | 100 | 94.7 | 91.2 | 75.3 |
| Comparative Example 2 | 100 | 95.6 | 91.4 | 76.8 |
| Comparative Example 3 | 100 | 96.1 | 92.6 | 79.2 |

It can be seen from the data in Tables 2 and 3 and FIG. 4 that, the high-nickel low-cobalt cathode materials prepared in Examples 1 to 6 of the present disclosure had good dynamic performance, the assembled batteries had high discharging specific capacity, high initial efficiency, good cycle performance, and excellent rate performance, thus having a wide application prospect in the field of lithium ion batteries.

In Comparative Example 1, since phosphorus sulfide treatment was not performed, the residual alkali was relatively high and seriously blocked the lithium ion transmission channels, so that the initial efficiency of the corresponding battery was reduced, and the discharging specific capacity was reduced. Meanwhile, since no coating layer was formed, the layered structure was gradually decomposed from the surface to the inward during charging and discharging, resulting in relatively poor capacity retention ratio.

In Comparative Example 2, the Li element content was seriously lost due to the water washing and drying processes, resulting in significant decrease in the initial capacity.

The initial discharging specific capacity and cycle retention ratio in Comparative Example 3 were improved compared with those in Comparative Example 1. However, after the water washing and drying processes, the Li element content in the high-nickel low-cobalt cathode material and the layered structure of the coating layer were destroyed and lost to a certain extent, which results in the initial capacity and cycle retention ratio being lower than those in Example 1.

In conclusion, it can be indicated that the high-nickel low-cobalt cathode material treated with the sulfur phosphorus compound in the present disclosure has the advantages of high initial discharging specific capacity, good long cycle performance, and good rate performance.

Various technical features in the above examples can be combined arbitrarily, and for the sake of concise description, not all possible combinations of the various technical features in the above examples are described, while the combinations of these technical features should be considered as within the scope of the present description as long as there is no contradiction.

The above examples merely express several implementation modes of the present disclosure, of which the description is relatively specific and detailed, but they should not be thus construed as limitation to the patent scope of the present disclosure. It should be noted that those ordinarily skilled in the art still could make several modifications and improvements without departing from the concept of the present disclosure, all of which fall within the scope of protection of the present disclosure. Therefore, the scope of protection of the present patent should be determined by the enclosed claims. The description and the attached drawings can be used to explain the contents of the claims.

### Industrial Applicability

The high-nickel low-cobalt cathode material provided in the present disclosure includes the cathode material matrix, the first coating layer, and the second coating layer. The high-nickel low-cobalt cathode material provided in the present disclosure can prevent the electrolytic solution from corroding the cathode material matrix, protect integrity of bulk phase structure, and effectively inhibit decomposition and collapse of layered structure of the high-nickel low-cobalt cathode material during the charging and discharging cycles, thereby improving the long cycle performance of the high-nickel low-cobalt cathode material. Therefore, the present disclosure has excellent applicability.

## Claims

1. A high-nickel low-cobalt cathode material, comprising a cathode material matrix, a first coating layer, and a second coating layer, wherein the first coating layer is coated on a surface of the cathode material matrix, and the second coating layer is coated on a surface of the first coating layer;
the first coating layer comprises a material of a chemical formula LiₐNi_{b}Co_{c}M_{1-b-c}O_{d}, where M comprises one or two of Mn and Al, 0.2≤a≤1, 0.88<b≤0.98, 0≤c<0.06, b+c<1, and 1.6≤d≤2; and
a material of the second coating layer comprises one or more of Li₃PO₄, Li₂SO₄, and LiPOs.

2. The high-nickel low-cobalt cathode material according to claim 1, wherein the cathode material matrix comprises a material of a chemical formula LiNiₓCo_{y}M_{1-x-y}O₂, where M comprises one or more of Mn and Al, 0.88<x≤0.98, 0≤y<0.06, and x+y≤1.

3. The high-nickel low-cobalt cathode material according to claim 1 or 2, having at least one of following features (1) to (5):
(1) a total mass of the first coating layer and the second coating layer: a mass of the cathode material matrix is (0.0001 to 0.005): 1;
(2) the first coating layer has a thickness of 5 nm to 10 nm;
(3) the first coating layer is of spinel phase;
(4) the second coating layer has a thickness of 2 nm to 5 nm; and
(5) the second coating layer is of halite phase.

4. A preparation method of the high-nickel low-cobalt cathode material according to any one of claims 1 to 3, comprising following steps:
providing the cathode material matrix; and
mixing the cathode material matrix with a sulfur phosphorus compound, and then performing a first calcination treatment, so as to form the first coating layer and the second coating layer on a surface of the cathode material matrix.

5. The preparation method according to claim 4, wherein a phosphorous element in the sulfur phosphorus compound: the cathode material matrix is (0.001 to 0.01): 1 in molar ratio.

6. The preparation method according to claim 4 or 5, wherein the sulfur phosphorus compound comprises one or more of phosphorus sulfide and phosphorus pentasulfide.

7. The preparation method according to claim 4, wherein process conditions of the first calcination treatment comprise: a first calcination temperature of 260 °C to 600 °C, and a first calcination time of 4 h to 12 h.

8. The preparation method according to claim 4, wherein a preparation method of the cathode material matrix comprises following steps:
S1, mixing a lithium source, a metal compound, and a cathode material matrix precursor, to obtain a mixture; and
S2, subjecting the mixture to a second calcination treatment.

9. The preparation method according to claim 8, wherein the preparation method of the cathode material matrix comprises at least one of following features (1) to (4):
(1) the cathode material matrix precursor comprises a material of a chemical formula NiₓCo_{y}M_{1-x-y}(OH)₂, where M comprises one or more of Mn and Al, 0.88<x≤0.98, 0≤y<0.06, and x+y<1;
(2) the lithium source comprises one or more of lithium hydroxide and lithium carbonate;
(3) the metal compound comprises a compound of one or more of Mg, Ti, Zr, Y, Nb, W, Ce, Sb, Sr, and Ta; and
(4) in step S2, a temperature of the second calcination treatment is 600 °C to 1000 °C, and a time of the second calcination treatment is 4 h to 20 h.

10. The preparation method according to claim 8 or 9, wherein in molar ratio, a lithium ion in the lithium source: a metal element in the metal compound: the cathode material matrix precursor is (1.00 to 1.08): (0 to 0.02): 1 in step S1.

11. A cathode sheet, comprising the high-nickel low-cobalt cathode material according to any one of claims 1 to 3 or the high-nickel low-cobalt cathode material prepared by the preparation method according to any one of claims 4 to 10.

12. A lithium ion battery, comprising the cathode sheet according to claim 11.

13. A power consumption device, comprising the lithium ion battery according to claim 12.
